# EUROPÄISCHE PATENTSCHRIFT

(11) **EP 0 772 069 B1**
(45) Veröffentlichungstag und Bekanntmachung des Hinweises auf die Patenterteilung: **18.05.2016**
(21) Anmeldenummer: 96116992.7
(22) Anmeldetag: 23.10.1996
(51) Int. Cl.: G02F 1/1333, G02F 1/1337, G02B 6/122, G02B 5/30

(54) **Optisches Bauelement**
Optical device
Dipspositif optique

(30) Priorität: 31.10.1995 CH 307595
(43) Veröffentlichungstag der Anmeldung: 07.05.1997
(73) Patentinhaber: Rolic AG, 6301 Zug (CH)
(72) Erfinder: Funfschilling, Jürg, 4054 Basel (CH); Ruetschi, Martin, 4057 Basel (CH); Schadt, Martin, 4411 Seltisberg (CH); Seiberle, Hubert, 79576 Weil am Rhein (DE)
(74) Vertreter: Veenstra, Eva

(56) Entgegenhaltungen:
- EP-A- 0 545 234
- EP-A- 0 611 981
- EP-A- 0 689 065
- EP-A- 0 689 084
- EP-A2- 0 435 029
- PATENT ABSTRACTS OF JAPAN vol. 016, no. 171 (P-1343), 24.April 1992 & JP 04 016927 A (RICOH CO LTD), 21.Januar 1992,

## Beschreibung

Die Erfindung betrifft ein optisches Bauelement bestehend aus einem oder zwei Substraten, einer oder mehreren Orientierungsschichten auf jedem der Substrate und einem oder mehreren anisotropen Filmen vernetzter flüssigkristalliner Monomere oder Oligomere mit lokal unterschiedlicher Orientierung der Flüssigkristallmoleküle auf dem bzw. zwischen den Substraten. Die Erfindung betrifft ferner die Herstellung und die Verwendung solcher Bauelemente.

Anisotrope transparente oder farbige Polymernetzwerkschichten mit hochaufgelöster vorgegebener räumlicher Orientierung der optischen Achse sind im Bereich der Displaytechnologie, der integrierten Optik und der Fälschungssicherung von grossem Interesse.

Aus EP - A - 545 234 sind Flüssigkristallzellen mit Feinstrukturen aus Bereichen definierter unterschiedlicher Orientierung und demzufolge unterschiedlichen Brechungsindizes bekannt. Die Herstellung solcher Brechungsindexmuster im Flüssigkristall erfolgt dadurch, dass auf der Oberfläche der an den Flüssigkristall grenzenden Orientierungsschicht mit einer entsprechend dem Abtaststift eines Raster-Kraft-Mikroskops (Scanning Probe oder Atomic Force Microscope [AFM]) bewegten Schreibspitze mikromechanisch eine Linienstruktur erzeugt wird. Je nach dem von der Schreibspitze ausgeübten Druck können die Linien entweder aus mehr oder weniger ausgeprägten Rillen oder nur aus Strängen einheitlich ausgerichteter Moleküle bestehen. In der folgenden Bu/So 14.8.96 Beschreibung wird für die Erzeugung einer Linienstruktur mittels einer Schreibspitze der Begriff "ritzen" verwendet. In einer Zelle aus so strukturierten Platten wird das auf der Orientierungsschicht befindliche Muster als Orientierungsmuster auf den Flüssigkristall übertragen. Als wichtige Anwendungen werden optisch nichtlineare flüssigkristalline oder eventuell eingefrorene Lichtleiterstrukturen erwähnt.

Aus EP - A - 611 981 sind Materialien und Verfahren bekannt, die es erlauben, Orientierungsstrukturen in monomeren Flüssigkristallen durch Vernetzung zu stabilisieren. Die Orientierungsstrukturen im Flüssigkristall werden dabei durch Orientierungsschichten aus einem photoorientierbaren Polymernetzwerk (sog. PPN-Schichten) induziert. Zu diesem Zweck wird in einem ersten Schritt in der PPN-Orientierungsschicht mit polarisiertem Licht photochemisch das gewünschte Muster erzeugt, das sich in einem zweiten Schritt auf eine beispielsweise durch Aufschleudern (Spin Coating) darauf aufgebrachte Flüssigkristallschicht überträgt (PPN-Verfahren). Anschliessend wird die Flüssigkristallstruktur vernetzt und somit stabilisiert. Eine solche vernetzte Flüssigkristallschicht wird im folgenden mit LCP (Liquid Crystal Polymer) abgekürzt.

In EP-A-689 084 sind optische Bauelemente beschrieben, die eine Schichtstruktur aus mehreren PPN-Orientierungsschichten und anisotropen Schichten vernetzter flüssigkristalliner Monomere aufweisen, die jedoch mit den Einschränkungen des PPN-Verfahrens, d.h. begrenzte Auflösung, wenig variable Direktorrichtung, limitierte Kippwinkelkontrolle, behaftet sind.

In der noch nicht publizierten schweizerischen Patentanmeldung Nr. 2036/95 ist die Herstellung und Verwendung optischer Bauelemente beschrieben, die als Masken, beispielsweise zur Uebertragung eines Polarisationsmusters auf eine polarisationsempfindliche Schicht, eingesetzt werden können.

In EP-A-689 065 sind optische PPN-Bauelemente mit einer Schichtstruktur und deren Herstellung beschrieben, die sich vor allem für die Anwendung im Bereich der Fälschungssicherung eignen.

In EP-A-435 029 wird die Verwendung von Schichten bestehend aus Flüssigkristallpolymeren in Sicherheitselementen offenbart. Aufgrund der beschriebenen Eigenschaften handelt es sich dabei um cholesterische Flüssigkristalle, die die Eigenschaft haben, Licht in einem bestimmten Wellenlängenbereich zu reflektieren. Die Schicht aus Flüssigkristallpolymeren wird hergestellt, indem das noch flüssige Flüssigkristallmaterial auf eine Trägerfläche aufgebracht und durch mechanisches Einwirken von Scherkräften orientiert wird.

Es wurde nun gefunden, dass die Verwendung von vernetzbaren Flüssigkristallen zusammen mit mikromechanisch geritzten Orientierungsschichten zu Strukturen mit wesentlich verbesserten oder sogar völlig neuen Eigenschaften führen kann.

Die Erfindung ist in Anspruch 1 definiert. Nur Ausführungsbeispiele mit einer durch das Orientierungsmuster der Orientierungsschicht bewirkten kontinuierlich verlaufenden Richtungsänderung des Direktors sind Ausführungsbeispiele der beanspruchten Erfindung. Ausführungsbeispiele ohne kontinuierlich verlaufende Richtungsänderung des Direktors sind nur Beispiele, die das Verständnis der Erfindung erleichtern.

Erfindungsgemäss zeichnet sich das eingangs genannte Bauelement dadurch aus, dass die an die Flüssigkristallschichten grenzenden Oberflächen der Orientierungsschichten in lokal begrenzten Bereichen Orientierungsmuster mit einer definierten parallelen oder fächerförmigen Linienstruktur aufweisen, wobei der mittlere Abstand der Linien nicht grösser ist als die Flüssigkristallschichtdicke und der Winkel zwischen benachbarten Linien nicht grösser ist als 3°.

Im Unterschied zum PPN-Verfahren lassen sich auf diese Weise z.B. kleinere Strukturen herstellen. Neben der Vorzugsrichtung lässt sich auch der Kippwinkel der Moleküle kontrollieren und modulieren, und die Vorzugsrichtung kann örtlich kontinuierlich variieren. Im Unterschied zu den in EP - A - 545 234 beschriebenen Flüssigkristallzellen wird beim vorliegenden Bauelement nur ein Substrat benötigt. Ausserdem können dreidimensionale Strukturen (Mehrfachschichten) realisiert werden.

Im folgenden werden anhand der beiliegenden Zeichnungen Ausführungsbeispiele der Erfindung beschrieben. Es zeigen
Fig. 1 eine schematische Schnittdarstellung einer Ausführungsform des erfindungsgemässen Bauelements
Fig. 2 eine schematische Schnittdarstellung einer weiteren Ausführungsform
Fig. 3 eine schematische Aufsicht auf eine weitere Ausführungsform
Fig. 4 eine Anordnung zur Herstellung erfindungsgemässer Bauelemente
Fig. 5 eine Darstellung von Varianten der Schreibspitzenführung.

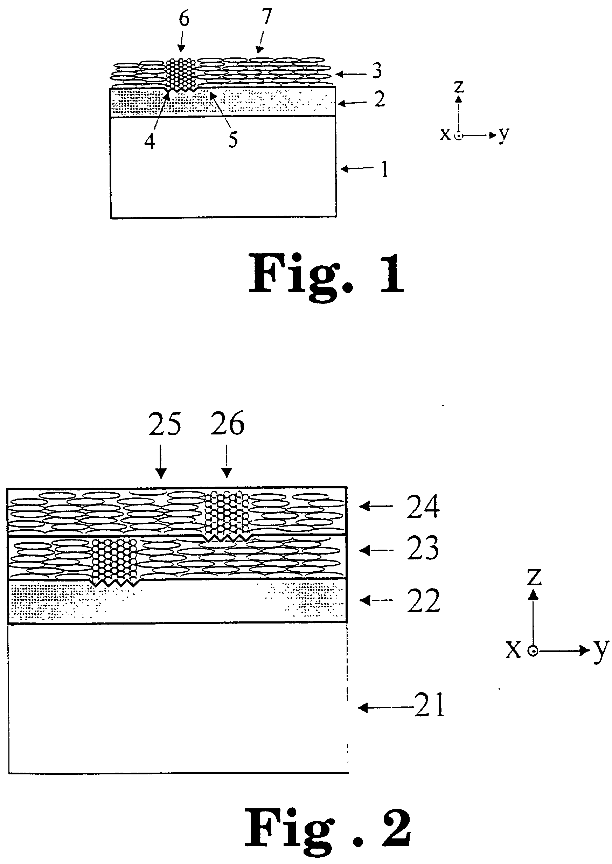

Wie in Fig. 1 gezeigt, befindet sich auf einem Substrat 1 (z.B. Glas) eine Orientierungsschicht 2. Diese Schicht besteht vorzugsweise aus Polyimid und wird beispielsweise durch Aufschleudern in einer dem Fachmann bekannten Weise aufgebracht. In einem ersten Schritt wird diese Orientierungsschicht parallel zu der in der Figur angegebenen y-Richtung konventionell gerieben. Dies dient bekanntlich dazu, eine im wesentlichen einheitliche Orientierung einer angrenzenden Flüssigkristallschicht parallel zur Reibrichtung zu bewirken . Anschliessend wird ein gewünschtes Orientierungsmuster mit einer mikromechanischen Schreibspitze eingeritzt. Die Art der Steuerung einer Schreibspitze ist aus der Technik der Scanning-Probe-Mikroskopie bekannt. Die Bewegung der Schreibspitze verläuft parallel zur x-Achse und bewirkt eine Feinstruktur in der Oberfläche, die in der Figur schematisch durch Rillen 4 angedeutet ist. Anschliessend wird ein geeignetes Flüssigkristallmonomergemisch gewünschter Dicke aufgeschleudert. Diese Flüssigkristallschicht orientiert sich in den nicht geritzten Regionen 5 parallel zur ursprünglichen Reibrichtung y und in der geritzten Region 4 parallel zur Ritzrichtung x. Dieses Einschreiben des Orientierungsmusters kann mit einer einzelnen Schreibspitze erfolgen, kann aber auch durch eine Vielzahl von Schreibspitzen parallel ausgeführt werden.

Anschliessend wird die Flüssigkristallschicht chemisch oder photochemisch vernetzt und damit stabilisiert. Sollen einzelne Teile der Schicht nicht fixiert werden, kann in diesem letzten Schritt bei photochemischer Vernetzung auch durch eine entsprechende Maske belichtet werden. Die fertige LCP-Schicht besteht in diesem Beispiel also aus Regionen 7, in denen die Flüssigkristallmoleküle parallel zur Reibrichtung y orientiert sind, und Regionen 6, in denen sie parallel zur Ritzrichtung x orientiert sind.

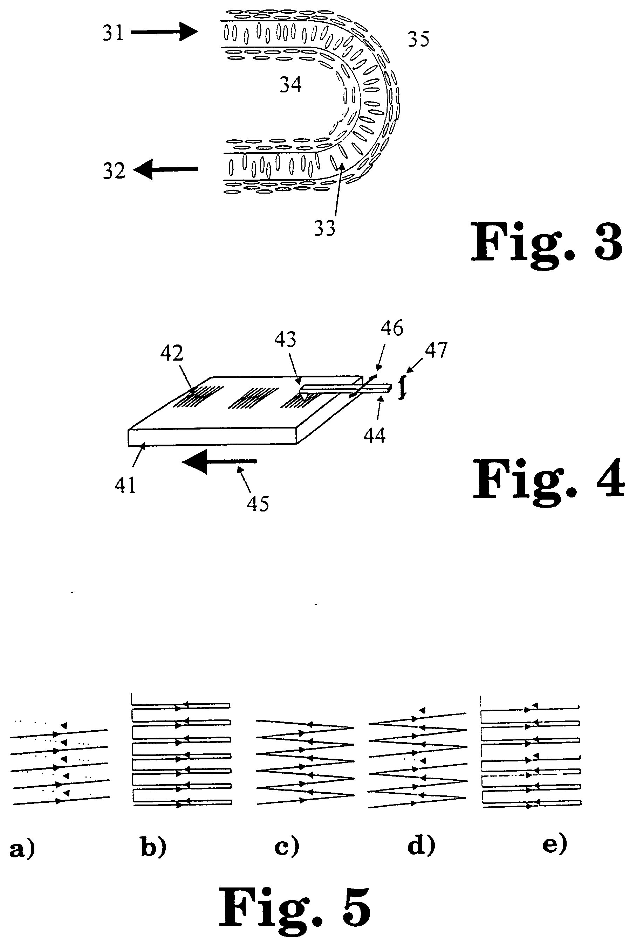

Durch geeignetes Steuern der Schreibspitze kann auch der Kippwinkel der Flüssigkristallmoleküle gesteuert und moduliert werden. Bekanntlich liegen die Flüssigkristallmoleküle nicht unbedingt genau parallel zur Oberfläche, sondern sind um einen vom Polymer der Orientierungsschicht abhängigen Kippwinkel aus der Ebene herausgekippt, wobei die Reib- oder Ritzrichtung entscheidet, ob sie um einen positiven oder negativen Winkel zur x-Richtung kippen. Wie dies bei der vorliegenden Erfindung ausgenutzt werden kann, ist in Fig. 5 dargestellt: die Ritzbewegung kann immer in dieselbe Richtung zeigen, wobei a) die Schreibspitze beim Rücklauf abgehoben wird oder b) indem beim Rücklauf jeweils die zuvor geschriebene Spur überschrieben wird. Im letzteren Fall muss der Vorschub in y-Richtung entsprechend synchronisiert werden. Diese beiden Ritzverfahren führen zum maximalen polymer-spezifischen Kippwinkel. Das bei c) gezeigte Ritzmuster führt zum Kippwinkel Null, die Muster d) oder e) zu Werten kleiner als das mögliche Maximum. Mit der Wahl des Ritzverfahrens kann so der Kippwinkel gezielt gesteuert und moduliert werden.

Da das vernetzte Polymer mechanisch stabil ist, kann das obige Verfahren mit oder ohne Puffer-Polymerschichten mehrfach angewendet werden. Dies ist in Fig. 2 gezeigt. Die Schichten 21, 22, 23 entsprechen den Schichten 1, 2, 3 von Fig. 1. Nach dem Vernetzen der Schicht 23 wird diese Schicht erneut gerieben und mikromechanisch geritzt. Alternativ können vor dem Reiben und Ritzen noch weitere Schichten aufgebracht werden, um z.B. die optischen Eigenschaften oder die Orientierungseigenschaften zu optimieren. Durch Aufschleudern der Schicht 24 und anschliessende Vernetzung erhält man ein weiteres Orientierungsmuster 25, 26. Dieses Verfahren lässt sich beliebig oft wiederholen, so dass auch in z-Richtung strukturierte, dreidimensionale Brechungsindexmuster entstehen.

Anwendung findet die vorliegende Erfindung überall dort, wo statische, d.h. nicht schaltende, Brechungsindexmuster mit hoher Auflösung benötigt werden. Der Anwendungsbereich umfasst also alle Gebiete, wo auch die mit dem PPN-Verfahren hergestellten Bauteile eingesetzt werden können Mit der vorliegenden Erfindung sind aber feinere Strukturen, kontinuierlich verlaufende Richtungsänderungen des Direktors und zusätzliche Kontrolle des Kippwinkels möglich, was zusätzlich zu den schon bekannten PPN-Anwendungen ganz neue, weitere Möglichkeiten eröffnet.

Dazu gehören beispielsweise Lichtleiterstrukturen in der integrierten Optik, wie Koppler, Einkoppelstrukturen (z.B. Gitter), Verzögerungsleitungen oder die Polarisation beeinflussende Strukturen. In Kombination mit aktiven oder NLO-aktiven Bauteilen können solche Lichtleiterstrukturen auch einfach als Verbindungsnetzwerk dienen. Mit der Möglichkeit von dreidimensionalen Netzwerken sind insbesondere auch Kopplungen zwischen Schichten möglich, sowie wechselwirkungsfreie Kreuzungen von Lichtleitern ein Beispiel für die Möglichkeiten der vorliegenden Erfindung ist der in Fig. 3 gezeigte 180°-Lichtleiterbogen. Das Licht 31 wird im Wellenleiter 33 geführt und macht einen 180° Bogen bis zur Stelle 32. Um eine solche Wellenleiterstruktur zu erzeugen, muss die Ritzrichtung sowohl in dem innerhalb des Bogens liegenden Bereich 34 und dem ausserhalb des Bogens liegenden Bereich 35, als auch im Wellenleiter 33 selbst örtlich kontinuierlich variieren können, was mit keiner der bisher bekannten Verfahren möglich ist.

Statische Brechungsindexmuster können auch dazu dienen, hochaufgelöste Masken z.B. für die PPN-Belichtung herzustellen. Mit der vorliegenden Erfindung lassen sich Masken mit höherer Auflösung und Komplexität herstellen als mit den in der schweizerischen Patentanmeldung Nr. 2036/95 beschriebenen photolithographischen Verfahren.

Statische Brechungsindexmuster sind auch für die Fälschungssicherung von Ausweisen und Dokumenten aller Art von grossem Interesse. Wegen der hohen Auflösung der erfindungsgemäss geritzten Muster lassen sich Beugungseffekte als zusätzliches Sicherheitselement einsetzen, das Brechungsindexmuster wirkt also als polarisationsabhängiges Hologramm. Werden, wie oben beschrieben, dreidimensionale Strukturen (Volumenhologramm) erzeugt, lässt sich auch die Streueffizienz stark erhöhen.

Grosse Wichtigkeit hat auch die Kombination der vorliegenden Erfindung mit dem PPN-Verfahren: mit dem PPN-Verfahren können die grossflächigen Bereiche optisch strukturiert und anschliessend die Mikrostrukturen mit dem erfindungsgemässen Verfahren aufgebracht werden. In diesem Falle sind also z.B. die in Figur 1 gezeigte Orientierungsschicht 2, die in Figur 2 gezeigte Schicht 22 nicht geriebene oder die mögliche Zwischenschicht zwischen 23 und 24 nicht geritzte Polymerschichten, sondern photostrukturierte Polymernetzwerke, in die nach der Vernetzung die zusätzlichen Ritzmuster eingeritzt wurden. Ähnliches gilt für alle oben aufgeführte Beispiele.

### Beispiel: Herstellung eines erfindungsgemässen Bauelements

Als vernetzbare Monomere wurden folgende Diacrylatkomponenten verwendet:

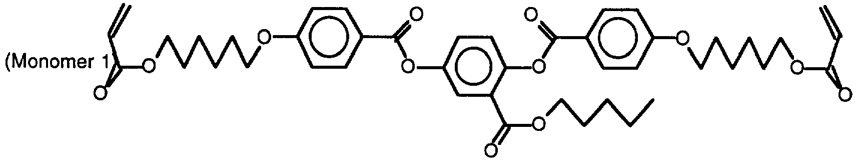

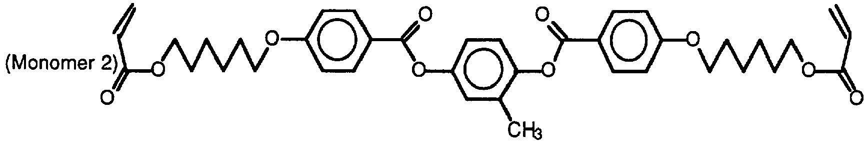

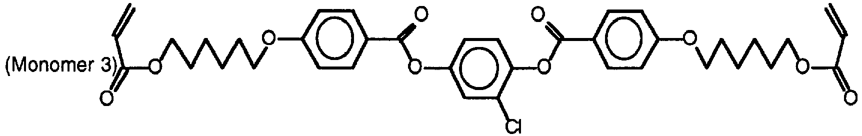

Mit diesen Komponenten wurde eine unterkühlbare, nematische Mischung MLCP mit besonders tiefem Schmelzpunkt (ca. 35°C) entwickelt, die es erlaubt, die Präparation bei Raumtemperatur auszuführen. Das Verhältnis der Monomere 1, 2, 3 in der Mischung war 80:15:5. Der Mischung wurden zusätzlich noch 2% des Photoinitiators IRGACURE 369 von Ciba-Geigy zugefügt.

Auf Probeplatten aus ITO (Indium-Zinn-Oxyd)-beschichtetem Glas wurde in bekannter Weise durch Aufschleudern eine ca. 100 nm dicke Polyimidschicht aufgebracht. Diese Schicht wurde mit einer konventionellen Reibapparatur gerieben. Anschliessend wurden Gitterstrukturen variabler Gitterkonstante, 45° zur ursprünglichen Reibrichtung geneigt, mit einer piezoelektrisch bewegten Schreibspitze eingeritzt. Dies ist in Fig. 4 schematisch dargestellt: die beschichtete Probe 41 ist auf einem motorisch in Richtung 45 bewegten (v = 3.6 mm/s) Tisch befestigt. Die Schreibspitze 43 ist an einem kleinen Balken 44 befestigt und kann piezoelektrisch in den beiden Richtungen 46 und 47 bewegt werden. In Richtung 46 wurde eine konstante Frequenz von 240 Hz angelegt, was einem mittleren Abstand der geritzten Linien von 7.5 nm entspricht, die Strichlänge ist 10 µm. Die Gitterperiode wurde durch periodisches Unterbrechen der Modulation erzeugt. Alternativ könnte man auch die Schreibspitze in Richtung 47 periodisch heben und senken.

Anschliessend wurde die LCP-Schicht durch Aufschleudern (Parameter: 2 Min. bei 2000 U/Min) aufgebracht. Durch die Wahl der Konzentration von M_{LCP} im Lösungsmittel Anisol konnte die Schichtdicke in weiten Grenzen variiert werden. Eine Konzentration von 5% lieferte z.B. eine Schichtdicke von ca. 65 nm. Anschliessend wurde die Schicht unter Vakuum photovernetzt (Hg-Bogenlampe, 30 Min.). Die vernetzten Strukturen wurden im Polarisationsmikroskop und mit dem Atomic-Force-Mikroskop (AFM) untersucht. Im Polarisationsmikroskop sah man bis zur Auflösungsgrenze des Mikroskops (d.h. bis zu Gitterperioden von 720 nm) deutlich die Gitter, d.h. die Streifen 42 in Figur 4 hatten eine anders orientierte Doppelbrechung als der Rest der Probe. Bei Beobachtung mit dem AFM wurden Gitter mit 240 nm Periode beobachtet. Diese Messungen zeigen, dass extrem feine Brechungsindexmuster in anisotropen vernetzten Polymeren erzeugt werden können.

## Patentansprüche

1. Optisches Bauelement umfassend ein Substrat (1, 21), eine Orientierungsschicht (2, 22) und eine anisotrope Schicht vernetzter flüssigkristalliner Monomere oder Oligomere (3, 23) mit lokal unterschiedlicher Orientierung der Flüssigkristallmoleküle (6, 7, 25, 26), wobei die an die Flüssigkristallschicht grenzende Oberfläche der Orientierungsschicht in lokal begrenzten Bereichen (4) Orientierungsmuster mit einer definierten parallelen oder fächerförmigen Linienstruktur, die aus mikromechanisch erzeugten rillenförmigen Strukturelementen besteht, aufweist, wobei der mittlere Abstand der Linien nicht grösser ist als die Flüssigkristallschichtdicke und der Winkel zwischen benachbarten Linien nicht grösser ist als 3°,
**dadurch gekennzeichnet, dass** die Flüssigkristallschicht eine durch das Orientierungsmuster der Orientierungsschicht bewirkte kontinuierlich verlaufende Richtungsänderung des Direktors aufweist.

2. Optisches Bauelement nach Anspruche 1, **dadurch gekennzeichnet, dass** die Orientierungsschicht aus einem photostrukturierten Polymernetzwerk besteht.

3. Verfahren zur Herstellung eines optischen Bauelementes nach einem der Ansprüche 1-2, **gekennzeichnet durch** die mikromechanische Erzeugung einer Linienstruktur an der Oberfläche einer Orientierungsschicht (2, 22), anschliessendes Aufbringen einer Schicht aus flüssigkristallinen Oligo- oder Monomeren (3, 23)und nachfolgendes Vernetzen der Flüssigkristallschicht.

4. Verfahren nach Anspruch 3, **dadurch gekennzeichnet, dass** die Richtung der optischen Achse entsprechend der Orientierung der geritzten Linien variiert.

5. Verfahren nach einem der Ansprüche 3 oder 4, **dadurch gekennzeichnet, dass** die Schicht vernetzter Flüssigkristallmoleküle aus einer Mischung von Monomeren oder Oligomeren besteht, die vor dem Vernetzen während mindestens der Verarbeitungsdauer und in einem Temperaturintervall von mindestens 1 °C im Bereich von 0 °C bis 60 °C flüssigkristallin sind.

6. Verwendung eines optischen Bauelementes gemäss einem der Ansprüche 1 - 2 als Maske für die Erzeugung eines definierten Licht-Polarisationsmusters, d.h. eines Lichtstrahles mit örtlich variablem Polarisationszustand.

7. Verwendung eines optischen Bauelementes gemäss einem der Ansprüche 1 - 2 für die photoinduzierte Erzeugung von Orientierungsmustern in polarisationsempfindlichen Photoschichten.

8. Verwendung eines optischen Bauelementes gemäss einem der Ansprüche 1 - 2 als Lichtleiter oder Lichtleiternetzwerk.

9. Verwendung eines optischen Bauelementes gemäss einem der Ansprüche 1 - 2 als Sicherheitselement in Ausweisen oder Dokumenten.

10. Verwendung eines optischen Bauelementes gemäss einem der Ansprüche 1 - 2 als lichtbeugendes Element.

## Claims

1. An optical device comprising a substrate (1, 21), an orientation layer (2, 22) and an anisotropic layer of crosslinked liquid-crystalline monomers or oligomers (3, 23) with locally varying orientation of the liquid crystal molecules (6, 7, 25, 26), wherein the surface of the orientation layer adjacent to said liquid crystal layer has regions (4) comprising orientation patterns with a defined parallel or fan-shaped line structure consisting of micro-mechanically produced groove-shaped structural elements, wherein the mean spacing of the lines is not larger than the liquid crystal layer thickness and the angle between neighboring lines is not greater than 3 °,
**characterized in that** the liquid crystal layer has a continuous variation of the director orientation, which is caused by the orientation pattern of the orientation layer.

2. Optical component according to Claim 1, **characterized in that** the orientation layer consists of a photo-structured polymer network.

3. Method for producing an optical component according to any one of claims 1-2,
**characterized by** the micro-mechanical generation of a line structure on the surface of an orientation layer (2, 22), then applying a layer of liquid crystalline oligomers or monomers (3, 23) and subsequent crosslinking of the liquid crystal layer.

4. The method according to claim 3, **characterized in that** the direction of the optical axis varies according to the orientation of the scribed lines.

5. The method according to any one of claims 3 or 4, **characterized in that** the layer of crosslinked liquid crystal molecules consists of a mixture of monomers or oligomers which, prior to crosslinking were liquid crystalline during at least the period of processing and over a temperature interval of at least 1 °C in the range of 0 °C to 60 °C.

6. Use of an optical component according to any one of claims 1-2 as a mask for the generation of a defined light polarization pattern, i.e. a light beam having a locally variable polarization state.

7. Use of an optical component according to one of claims 1 - 2 for the photo-induced generation of orientation pattern in polarization-sensitive photo layers.

8. Use of an optical component according to any one of claims 1-2 as a light guide or optical fiber network.

9. Use of an optical component according to any one of claims 1-2 as a security element in identity cards or documents.

10. Use of an optical component according to any one of claims 1-2 as a light diffractive element.

## Revendications

1. Dispositif optique comprenant un substrat (1, 21), une couche d'orientation (2, 22) et une couche anisotrope de monomères cristaux liquides réticulés ou oligomères (3, 23), en faisant varier localement l'orientation des molécules de cristaux liquides (6, 7, 25, 26), dans lequel la contiguë à ladite surface de la couche de cristaux liquides de la couche d'orientation dans des zones localisées (4) des motifs d'orientation ayant une structure de lignes parallèles ou en forme d'éventail défini constitué de micro-mécanique produit des éléments de structure en forme de rainure qui, à l'espacement moyen des lignes ne soit pas supérieure à celle du liquide épaisseur de la couche de cristaux et l'angle entre des lignes adjacentes est inférieure ou égale à 3 °,
**caractérisé en ce que** la couche de cristaux liquides ayant un motif causé par l'orientation de la couche d'alignement se prolongent sans interruption de changement de direction du directeur.

2. Composant optique selon la revendication 1, **caractérisé en ce que** la couche d'orientation se compose d'un réseau polymère photo-structuré.

3. Procédé de fabrication d' un composant optique selon l'une quelconque des revendications 1-2, **caractérisé par** le micro- mécanique génération d'une structure de lignes sur la surface d' une couche d'alignement (2, 22), puis à appliquer une couche d'oligomères cristallins liquides ou des monomères (3, 23) et ensuite la réticulation la couche de cristaux liquides .

4. Procédé selon la revendication 3, **caractérisé en ce que** la direction de l'axe optique varie en fonction de l'orientation des lignes de traçage.

5. Procédé selon l'une quelconque des revendications 3 ou 4, **caractérisé en ce que** la couche de molécules de cristal liquide réticulé est constitué d'un mélange de monomères ou d'oligomères qui, avant réticulation, pendant au moins le temps de traitement et dans un intervalle d'au moins 1 °C de la température dans l'intervalle de 0 °C liquide cristallin à 60 °C.

6. Utilisation d'un composant optique selon l'une quelconque des revendications 1-2 en tant que masque pour la génération d'un motif de polarisation de la lumière définie, à savoir un faisceau lumineux ayant un état de polarisation variable localement.

7. Utilisation d'un composant optique selon l'une quelconque des revendications 1 - 2 pour la génération des motifs d'orientation photo-induite dans les couches de photo sensibles à la polarisation.

8. Utilisation d'un composant optique selon l'une quelconque des revendications 1-2 en tant que guide de lumière ou réseau de fibres optiques.

9. Utilisation d'un composant optique selon l'une quelconque des revendications 1-2 comme élément de sécurité dans des cartes d'identité ou autres documents.

10. Utilisation d' un composant optique selon l'une quelconque des revendications 1-2 comme un élément diffractif .
